# EUROPÄISCHE PATENTSCHRIFT

(11) **EP 1 491 400 B1**
(45) Veröffentlichungstag und Bekanntmachung des Hinweises auf die Patenterteilung: **01.10.2008**
(21) Anmeldenummer: 04014810.8
(22) Anmeldetag: 24.06.2004
(51) Int. Cl.: B60Q 1/00, B60Q 1/12

(54) **Scheinwerfer für Fahrzeuge**
Headlamp for vehicles
Projecteur pour véhicules

(30) Priorität: 25.06.2003 DE 10328496
(43) Veröffentlichungstag der Anmeldung: 29.12.2004
(73) Patentinhaber: Hella KGaA Hueck & Co., 59552 Lippstadt (DE)
(72) Erfinder: Seiger, Ralf, 59556 Lippstadt (DE)

(56) Entgegenhaltungen:
- DE-A1- 10 044 392
- DE-A1- 10 202 882
- DE-U1- 29 916 707
- US-A- 5 099 400
- US-A- 5 416 465
- PATENT ABSTRACTS OF JAPAN Bd. 018, Nr. 072 (M-1555), 7. Februar 1994 (1994-02-07) -& JP 05 286392 A (NISSAN MOTOR CO LTD), 2. November 1993 (1993-11-02)

## Beschreibung

Die Erfindung betrifft einen Scheinwerfer für Fahrzeuge nach dem Oberbegriff des Patentanspruchs 1.

Aus der DE 100 21 040 A1 ist ein Scheinwerfer für Fahrzeuge bekannt, bei dem eine Stelleinrichtung zur Verstellung des Reflektors um eine vertikale Verschwenkachse vorgesehen ist. Die Stelleinrichtung weist einen Stellmotor auf, der direkt an einem ausladenden Bogenelement des Reflektors angreift. Hierdurch wird der Reflektor zusammen mit einem den Reflektor tragenden Tragrahmen um eine die optische Achse des Reflektors schneidende Verschwenkachse, die zugleich in der Längsmittelebene des Tragrahmens verläuft, verschwenkt. Nachteilig an dem bekannten Scheinwerfer ist, dass auf Grund der in Lichtaustrittsrichtung relativ zurückliegenden Anordnung der Verschwenkachse die Bildung eines Kurvenlichtes gar nicht oder nur schwer möglich ist, wenn sich neben dem Reflektor abschattende Teile des Scheinwerfers befinden.

Aus der DE 100 59 677 A1 ist ein Scheinwerfer für Fahrzeuge mit einem Reflektor, einer Lichtquelle und einer Stelleinrichtung zur Verstellung des Reflektors um eine vertikale Verschwenkachse zur Bildung eines Kurvenlichtes bekannt, bei dem die Verschwenkachse in einem vorderen mittleren Bereich des Reflektors verläuft, wobei sie eine den vorderen Rand des Reflektors enthaltene Ebene schneidet. Nachteilig an dem bekannten Scheinwerfer ist, dass zur geometrischen Umgehung von abschattenden Teilen des Scheinwerfers bzw. eines Randes des Scheinwerfers der Schwenkwinkel bezogen auf den zurückgelegten Schwenkweg relativ groß ist. Darüber hinaus kann nicht ohne weiteres die gesamte Reflektorfläche zur Erzeugung des Kurvenlichtes genutzt werden.

Aus der DE 197 54 217 A1 ist ein Scheinwerfer für Fahrzeuge mit einem Reflektor, einer Lichtquelle und einer Stelleinrichtung zur Verstellung des Reflektors um eine vertikale Verschwenkachse bekannt, die keinen Schnittpunkt mit der optischen Achse des Reflektors bildet und zugleich beabstandet zu der optischen Achse angeordnet ist. Die Verschwenkachse ist jedoch nicht in einem solchen Bereich angeordnet, dass durch Betätigen der Stelleinrichtung ein Hervorschwenken des Reflektors möglich wäre und hierdurch ein seitlich angeordnetes abschattendes Teil des Scheinwerfers optisch "überwunden" werden könnte.

Aus der US 5 416 465 A ist ein Scheinwerfer für Fahrzeuge bekannt, der mittels einer Stelleinrichtung um eine vertikale Verschwenkachse in Abhängigkeit von einem Lenkwinkel des Lenkrads des Fahrzeugs verschwenkbar angeordnet ist. Zum Verschwenken des Scheinwerfers ist ein Gehäuse desselben mit zwei Linearstellelementen gelenkig verbunden. Die Verschwenkachse verläuft in Lichtabstrahlrichtung hinter dem Gehäuse.

Aus der DE 102 02 882 A1 ist ein Scheinwerfer für Fahrzeuge bekannt, der über einen oberen feststehenden Hauptreflektor und einen um eine vertikale Verschwenkachse verschwenkbaren unteren Reflektor verfügt. Der untere Reflektor ist über eine Lasche mit einem Trägerteil verbunden, wobei die Lasche mittels einer Drehscheibe in Längsrichtung bewegt wird. Der untere Reflektor ist über einen weiteren Haltesteg gelenkig um eine Verschwenkachse gelagert. Die Verschwenkachse verläuft in einem mittleren Teil des unteren Reflektors. Dadurch, dass die Lasche in einem Abstand zu der Verschwenkachse an dem unteren Reflektor angelenkt ist, kann durch Längsbewegung der Lasche ein Verschwenken des unteren Reflektors in Querrichtung erzielt werden.

Aus der JP 05 286 392 A ist ein Scheinwerfer für Fahrzeuge bekannt, der als ein Abblendlicht-Scheinwerfer ausgebildet ist mit einem Reflektor und einer im zentralen Bereich des Reflektors angeordneten Lichtquelle. Mittels einer Stelleinrichtung kann der Reflektor um eine vertikale Schwenkachse verschwenkt werden. Ein Stellelement der Stelleinrichtung ist im Bereich eines vorderen Randes des Reflektors gelenkig mit demselben verbunden, wobei eine vertikale Verschwenkachse gebildet ist.

Aufgabe der vorliegenden Erfindung ist es, einen Scheinwerfer für Fahrzeuge derart weiterzubilden, dass auf einfache Weise eine Maximierung der Fahrbahnausleuchtung auch dann gegeben ist, wenn sich seitlich neben einem Reflektor des Scheinwerfers abschattende Teile befinden.

Zur Lösung dieser Aufgabe weist die Erfindung die Merkmale des Patentanspruchs 1 auf.

Der besondere Vorteil der Erfindung besteht darin, dass durch die Anordnung der Verschwenkachse im Bereich eines vorderen Randes des Reflektors annähernd die gesamte Reflektorfläche zur Fahrbahnausleuchtung auch nach Herausschwenken des Reflektors zum Einsatz kommt. Dabei grenzt die Verschwenkachse an einem seitlichen abschattenden Teil des Scheinwerfers an, der in der Kurvenlichtposition des Reflektors - nach Herausschwenken des Reflektors - das austretende Lichtbündel nicht behindert. Dadurch, dass die Verschwenkachse an einem radial äußeren Rand des Reflektors angeordnet ist, kann durch Verschwenken des Reflektors um einen relativ kleinen Verschwenkwinkel ein relativ großer Verschwenkweg auf der zu der Verschwenkachse gegenüberliegenden Seite des Reflektorrandes erzielt werden. Grundgedanke der Erfindung ist es, die Verschwenkachse des Reflektors möglichst nah an einem vorderen Rand des abschattenden Teils des Scheinwerfers (lichttechnischen Hindernisses) zu positionieren.

Nach einer bevorzugten Ausführungsform der Erfindung ist die Verschwenkachse auf einer der Fahrzeuglängsmittelebene abgewandten Seite des Reflektors angeordnet, so dass ein seitlich außen liegenden lichttechnisches Hindernis, wie beispielsweise ein Blinklichtgehäuse, nicht das vom Reflektor ausgehende Lichtbündel beeinträchtigt.

Nach einer Weiterbildung der Erfindung ist die Stelleinrichtung an einem Tragrahmen des Reflektors gehaltert, wobei an dem Tragrahmen zusätzlich ein weiterer Reflektor zur Erzeugung einer zweiten Lichtfunktion integriert ist. Der Scheinwerfer hat somit einen kompakten und platzsparenden Aufbau.

Nach einer Weiterbildung der Erfindung weist die Stelleinrichtung einen Stellmotor auf, der mittels eines Motorstößels gelenkig mit dem Reflektor verbunden ist. Darüber hinaus kann der Stellmotor gelenkig gelagert sein, so dass Schiebebewegungen zwischen dem Motorstößel und dem Reflektor vermieden werden können.

Nach einer Weiterbildung der Erfindung ist der Reflektor mit mindestens zwei unterschiedliche Bewegungsrichtungen bewirkende Bewegungsanschlüssen versehen, so dass die Verschwenkbewegung durch Überlagerung von unterschiedlichen Bewegungsbahnen erzeugt wird. Nach einer ersten Variante können die Bewegungsbahnen zeitversetzt nacheinander überstrichen werden. Nach einer zweiten Variante können die Bewegungsanschlüsse gleichzeitig betätigt werden, wobei die damit verbundenen Bewegungsrichtungen gleich sind.

Nach einer bevorzugten Ausführungsform bewirkt ein erster Bewegungsanschluss eine Drehbewegung um einen ersten Radius und ein zweiter Bewegungsanschluss eine Drehbewegung um einen zweiten Radius. Hierdurch kann eine erzielte Anpassung der resultierenden Reflektorbewegung an die Form des abschattenden Teils des Scheinwerfers erfolgen.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: einen Horizontalschnitt durch einen Scheinwerfer nach einer ersten Ausführungsform des Scheinwerfers,
- Figur 2: einen Horizontalschnitt durch einen Scheinwerfer nach einer zweiten Ausführungsform des Scheinwerfers, die nicht Teil der Erfindung ist,
- Figur 3: einen horizontalen Teilschnitt durch einen Scheinwerfer nach einer dritten Ausführungsform des Scheinwerfers,
- Figur 4: einen Horizontalschnitt durch einen Scheinwerfer nach einer vierten Ausführungsform des Scheinwerfers, die nicht Teil der Erfindung ist, und
- Figur 5: einen horizontalen Teilschnitt durch einen Scheinwerfer nach einer fünften Ausführungsform, die nicht Teil der Erfindung ist, des Scheinwerfers.

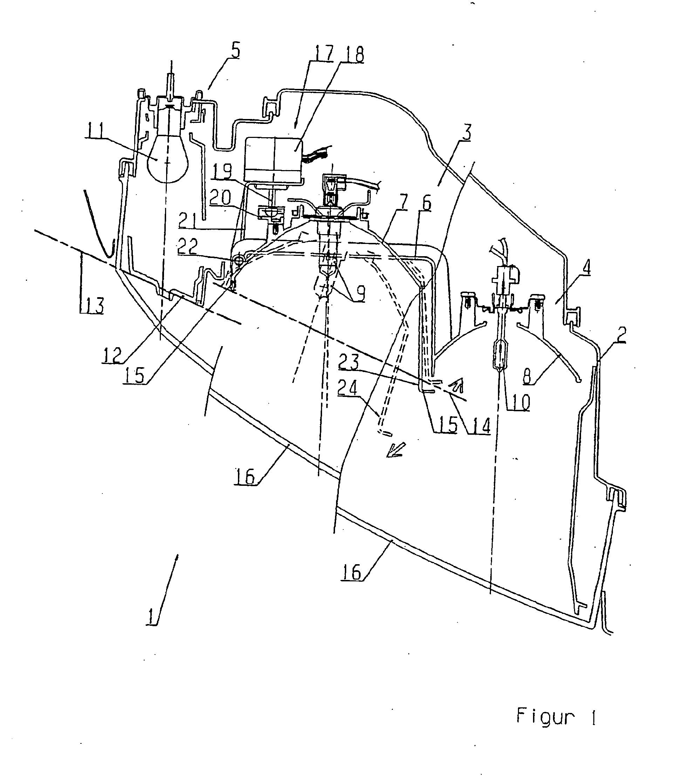

Figur 1 zeigt einen Scheinwerfer 1 für Kraftfahrzeuge, in dessen Gehäuse 2 ein Abblendlicht-Scheinwerferteil 3, ein Fernlicht-Scheinwerferteil 4 und ein Richtungsanzeigerteil 5 untergebracht sind.

Ein Tragrahmen 6 dient zur Aufnahme eines Reflektors 7 des Abblendlicht-Scheinwerferteils 3 und eines Reflektors 8 des Fernlicht-Scheinwerferteils 4. In einer zentralen Öffnung der topfförmigen Reflektoren 7, 8 sind jeweils in üblicher Weise Lichtquellen 9 bzw. 10 gehaltert. Auf einer der Fahrzeuglängsmittelebene abgewandten Seite des Abblendlicht-Scheinwerferteils 3 ist das Richtungsanzeigeteil 5 angeordnet, das eine Lichtquelle 11 und ein farbiges Abschlussteil 12 aufweist. Das Abschlussteil 12 erstreckt sich etwa in einer Ebene 13, die um ein geringes Maß parallel versetzt zu einer Ebene 14 verläuft, in der ein vorderer Rand 15 des Reflektors 7 verläuft. Das Abblendlicht-Scheinwerferteil 3, das Fernlicht-Scheinwerferteil 4 und das Richtungsanzeigeteil 5 sind durch eine gemeinsame transparente Abdeckscheibe 16 abgedeckt.

Zur Bildung eines Kurvenlichtes ist dem Reflektor 7 des Abblendlicht-Scheinwerferteil 3 eine Stelleinrichtung 17 zugeordnet, die einen Stellmotor 18 mit einem Motorstößel 19 umfasst. Der Motorstößel 19 ist mit seinem freien Ende gelenkig an einem rückseitig von dem Reflektor 7 abragenden Gelenkteil 20 gelagert. Der Stellmotor 18 ist über ein winkelförmiges Halteteil 21 fest mit dem Tragrahmen 6 verbunden.

Der Reflektor 7 des Abblendlicht-Scheinwerferteils 3 ist um eine vertikale Verschwenkachse 22 in horizontaler Richtung schwenkbar gelagert. Die vertikale Verschwenkachse 22 ist in einem solchen Bereich des vorderen Randes 15 des Reflektors 7 angeordnet, der sich zugleich in der Nähe des vorderen Abschlussteils 12 des Richtungsanzeigerteils 5 befindet. Das Abschlussteil 12 bildet ein lichttechnisches Hindernis, wenn sich der Reflektor 7 von einer Normalposition 23 in eine Kurvenlichtposition 24 (gestrichelt gezeichnet) bewegen soll. Im vorliegenden Ausführungsbeispiel ist der Scheinwerfer 1 auf einer rechten Seite des Fahrzeuges angeordnet. Die Kurvenlichtfunktion des rechten Scheinwerfers 1 wird nur im Fall einer Rechtskurve eingesetzt. Bei einer Linkskurve wird ein nicht dargestellter Reflektor des Abblendlicht-Scheinwerferteils eines spiegelbildlich angeordneten linken Scheinwerfers betätigt.

An dem Tragrahmen 6 kann zusätzlich eine nicht dargestellten Leuchtweite-Stelleinrichtung angreifen zum Verschwenken der Reflektoren 7 und 8 um eine horizontale Verschwenkachse.

Zum Verbringen des Reflektors 7 aus der Normalposition 23 in die Kurvenlichtposition 24 wird der Stellmotor 18 durch eine nicht dargestellte Steuereinrichtung angesteuert, so dass der Motorstößel 19 ausfährt und den Reflektor 7 zusammen mit der Lichtquelle 9 um die Verschwenkachse 22 nach vorne verschwenkt, ohne dass das aus dem Reflektor 7 austretende Lichtbündel durch das Abschlussteil 12 des Richtungsanzeigerteils 5 beeinträchtigt wird.

Nach einer nicht dargestellten Ausführungsform kann der Stellmotor 18 auch gelenkig gelagert sein, so dass unerwünschte Schiebebewegungen zwischen dem Motorstößel 19 und dem Gelenkteil 20 vermieden werden.

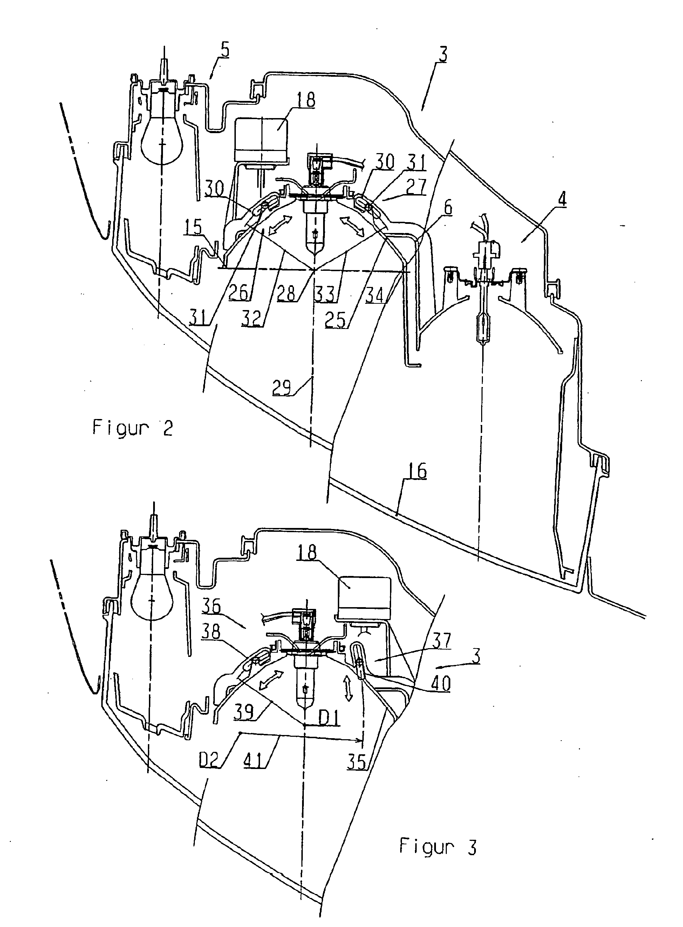

Nach einer zweiten Ausführungsform des Scheinwerfers 1, die nicht Teil der Erfindung ist, gemäß Figur 2 ist ein Reflektor 25 des Abblendlicht-Scheinwerferteils 3 über zwei Bewegungsanschlüsse 26, 27 an dem Tragrahmen 6 beweglich gelagert. Gleiche Funktionsteile des Scheinwerfers der ersten und zweiten Ausführungsform sind mit den gleichen Bezugsziffern versehen. Die Verstellung des Reflektors 25 wird in gleicher Weise wie nach der ersten Ausführungsform mittels des Stellmotors 18 bewirkt. Im Unterschied zur ersten Ausführungsform ist eine vertikale Verschwenkachse 28 nicht im vorderen Randbereich des Reflektors 25 sondern mittig unter Schneiden einer optischen Achse 29 des Reflektors 25 angeordnet. Die Bewegungsanschlüsse 26, 27 sind zu beiden Seiten der vertikalen Längsmittelebene des Reflektors 25 angeordnet. Dabei bildet der Tragrahmen 6 eine Kulissenführung 30, in der ein Führungsteil 31 des Reflektors 25 um einen vorgegebenen Radius 32 bzw. 33 geführt ist. Durch die Länge der Kulissenführung 30 wird maßgeblich der maximale Schwenkweg vorgegeben. Durch die Krümmung der Kulissenführung wird maßgeblich der maximale Schwenkwinkel vorgegeben. Im vorliegenden Ausführungsbeispiel sind der Radius 32 und 33 gleich ausgebildet, so dass sich die Verschwenkachse 28 im zentralen vorderen Bereich des Reflektors 25 befindet und Bestandteil einer vorderen Ebene 34 ist, die durch den vorderen Rand 15 des Reflektors 25 aufgespannt ist. Durch Vergrößerung der Krümmung der Kulissenführung 30 des zweiten Bewegungsanschlusse 27 kann der Standort der Verschwenkachse 28 in Richtung des dem Richtungsanzeigeteil 5 zugewandten Randes des Reflektors 25 verändert werden. Der vorgegebene Standort der Verschwenkachse 28 hängt von den Gegebenheiten des Scheinwerfers, insbesondere der Pfeilung des Scheinwerfers ab.

Nach einer dritten Ausführungsform des Scheinwerfers 1 gemäß Figur 3 ist ein Reflektor 35 des Abblendlicht-Scheinwerferteils 3 mit einem ersten Bewegungsanschluss 36 und einem zweiten Bewegungsanschluss 37 versehen, die sich von den Bewegungsanschlüssen der zweiten Ausführungsform dadurch unterscheiden, dass die durch sie bewirkten Bewegungsbahnen des Reflektors 35 unterschiedlich sind. Der erste Bewegungsanschluss 36 wird - wie nach dem zweiten Ausführungsbeispiel - durch eine Kulissenführung 38 mit einem ersten Radius 39 gebildet, wobei die Drehachse D1 durch die optische Achse 29 des Reflektors 35 verläuft.

Der zweite Bewegungsanschluss 37 weist eine annähernd lineare Führungsaufnahme 40 für das Führungsteil 31 des Reflektors 35 auf, so dass ein hierdurch gebildeter zweiter Radius 41 relativ groß ist. Eine hierdurch gebildete Drehachse D2 befindet sich in einem vorderen Randbereich des Reflektors 35, und zwar in der Nähe des Abschlussteils 12 des Richtungsanzeigeteils 5. Es ergibt sich somit eine Kombination bzw. Überlagerung von unterschiedlich gerichteten Bewegungsbahnen. Bei Betätigung des Stellmotors 18 bewirkt der erste Bewegungsanschluss 36 eine geführte Bewegung des Reflektors 35 schräg nach vorne in Richtung des Richtungsanzeigeteils 5. Der zweite Bewegungsanschluss 37 bewirkt zugleich eine Verdrehung des Reflektors 35 um die vertikale Verschwenkachse D2. Durch die Kombination unterschiedlicher gerichteter Bewegungsbahnen kann die eigentliche Verschwenkachse D2 näher zur optischen Achse 29 angeordnet sein bzw. der erforderliche Schwenkwinkel des Reflektors 35 zur Erreichung der Kurvenlichtposition kleiner gewählt sein.

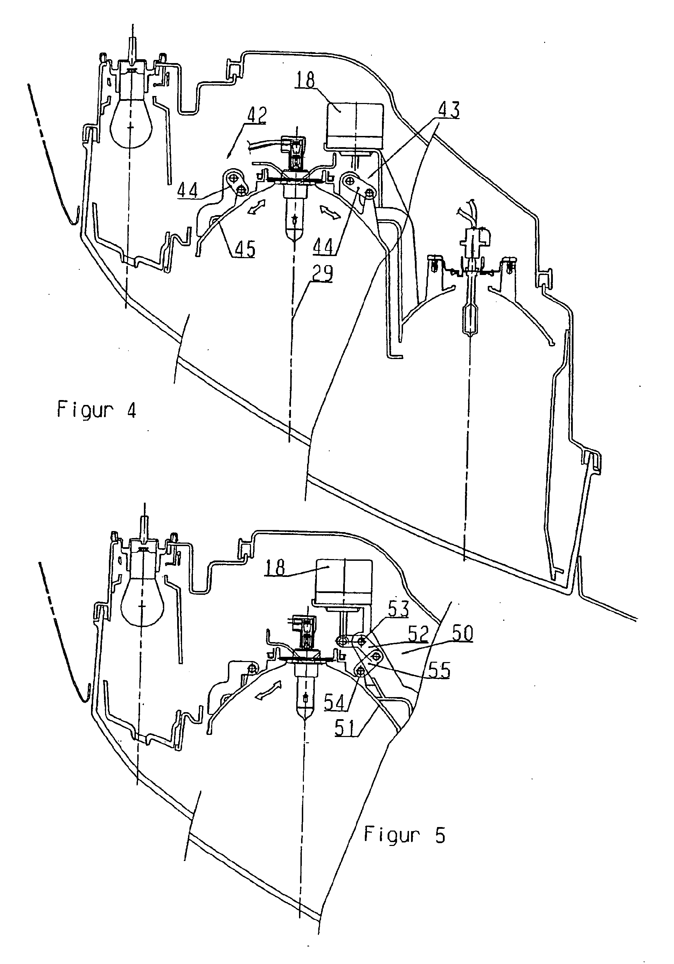

Nach einer vierten Ausführungsform des Scheinwerfers 1, der nicht Teil der Erfindung ist, gemäß Figur 4 kann ein erster Bewegungsanschluss 42 und ein zweiter Bewegungsanschluss 43 jeweils durch ein Gelenkgestänge 44 gebildet sein. Die beiden Bewegungsanschlüsse 42, 43 befinden sich zu beiden Seiten der optischen Achse 29. Durch die Anbindung der Gelenkstangen 44 an den Tragrahmen 6 wird eine geführte Verschwenkbewegung des Reflektors 45 ermöglicht.

Nach einer weiteren Ausführungsform, der nicht Teil der Erfindung ist, gemäß Figur 5 kann der Stellmotor 18 auch über ein mehrarmiges Gestänge 50 auf einen Reflektor 51 einwirken. Das Gestänge 50 weist einen Hebel 52 auf, der drehbar um eine Achse 53 an dem Tragrahmen 6 gelagert ist. Sowohl das Ende des Motorstößels 19 des Stellmotors 18 als auch ein um eine Gelenkstange 55 verlängertes Gelenkteil 54 des Reflektors 51 sind gelenkig mit dem Hebel 52 verbunden. Bei Betätigung des Stellmotors 18 erfolgt eine horizontale Verschwenkbewegung des Reflektors 51 um eine Verschwenkachse, die in der Nähe des vorderen äußeren bzw. dem Blinklichtteil zugewandten Rand des Reflektors orientiert ist.

Das Abschlussteil 12 kann auch als Karosserieteil ausgebildet sein.

## Patentansprüche

1. Scheinwerfer für Fahrzeuge mit einem Abblendlicht-Scheinwerferteil (3) enthaltend einen Reflektor (7) und eine im zentralen Bereich des Reflektors (7) angeordnete Lichtquelle (9), und mit einer Stelleinrichtung (17) zur Verstellung des Reflektors (7) um eine vertikale Verschwenkachse (22), wobei der Reflektor (7) im Wesentlichen um eine im Bereich eines vorderen Randes (15) des Reflektors (7) angeordnete Verschwenkachse (22) verschwenkbar gelagert ist, **dadurch gekennzeichnet, dass** auf einer der Fahrzeugslängsmittelebene abgewandten Seite des Abblendlicht-Scheinwerferteils (3) ein Richtungsanzeigeteil (5) angeordnet ist und dass die Verschwenkachse (22) in einem solchen Bereich des vorderen Randes (15) des Reflektors (7) angeordnet ist, der sich in der Nähe eines vorderen Abschlussteils (12) eines Richtungsanzeigeteils (5) befindet.

2. Scheinwerfer nach Anspruch 1, **dadurch gekennzeichnet, dass** die Verschwenkachse (22) auf einer der Fahrzeuglängsmittelebene abgewandten Seite des Reflektors (7, 25, 35, 45, 51) verläuft.

3. Scheinwerfer nach Anspruch 1 oder 2, **dadurch gekennzeichnet, dass** die Stelleinrichtung (17) an einem Tragrahmen (6) des Reflektors (7, 25, 35, 45, 51) gehaltert ist, der zusätzlich einen Reflektor (8) für eine weitere Lichtfunktion trägt.

4. Scheinwerfers nach einem der Ansprüche 1 bis 3, **dadurch gekennzeichnet, dass** die Stelleinrichtung (17) einen Stellmotor (18) umfasst, der über einen Motorstößel (19) gelenkig mit dem Reflektor (7) verbunden ist, und dass der Stellmotor (18) gelenkig gelagert ist.

5. Scheinwerfer nach einem der Ansprüche 1 bis 4, **dadurch gekennzeichnet, dass** der Reflektor (25, 35, 45, 51) über mindestens zwei unterschiedliche Bewegungsrichtungen bewirkenden Bewegungsanschlüsse (26, 27, 36, 37, 42, 43) mit dem Stellmotor (18) gekoppelt ist.

6. Scheinwerfer nach einem der Ansprüche 1 bis 5, **dadurch gekennzeichnet, dass** die Bewegungsanschlüsse derart ausgebildet sind, dass der erste Bewegungsanschluss (26, 36, 42) eine Drehbewegung um einen ersten Radius (32, 39) und der zweite Bewegungsanschluss (27, 37, 43) eine Drehbewegung um einen zweiten Radius (33, 41) bewirkt, wobei der erste Radius (32, 39) und der zweite Radius (33, 41) gleich oder ungleich sind.

7. Scheinwerfer nach einem der Ansprüche 1 bis 6, **dadurch gekennzeichnet, dass** der erste Bewegungsanschluss (26, 36, 42) auf der einen Seite der vertikalen Längsmittelebene des Reflektors (25, 35, 45) und der zweite Bewegungsanschluss (27, 37, 43) auf der gegenüberliegenden Seite der vertikalen Längsmittelebene des Reflektors (25, 35, 45) angeordnet sind.

8. Scheinwerfer nach einem der Ansprüche 1 bis 7, **dadurch gekennzeichnet, dass** mindestens ein Bewegungsanschluss (26, 27, 36) durch eine Kulissenführung (30, 38) gebildet ist, in der ein Führungsteil (31) des Reflektors (25, 35) geführt ist.

9. Scheinwerfer nach einem der Ansprüche 1 bis 8, **dadurch gekennzeichnet, dass** der Bewegungsanschluss (42, 43) durch ein Gelenkgestänge (44) gebildet ist.

10. Scheinwerfer nach einem der Ansprüche 1 bis 9, **dadurch gekennzeichnet, dass** die durch den vorderen Rand (15) des Reflektors (7, 25, 35, 45, 51) gebildete Ebene in der Ebene eines seitlich außen liegenden Abschlussteils (12) des Scheinwerfers oder in einem Abstand zurückgesetzt zu der Ebene des Abschlussteils (12) angeordnet ist.

## Claims

1. Headlamp for vehicles with a low beam headlamp component (3) containing a reflector (7) and a light source (9) located in the central area of the reflector (7), and with an adjustment device (17) for setting the reflector (7) to a point on a vertical swiveling axis (22), wherein the reflector (7) is mainly carried by and can swivel around a swiveling axis (22) located along a front edge (15) of the reflector (7), **characterized by** a direction indicator component (5) located on the side of the low beam headlamp component (3) that faces away from the central longitudinal plane of the vehicle, and further **characterized by** the swiveling axis (22) being located along a front edge (15) of the reflector (7) that is close to a front terminating part (12) of a direction indicator component (5).

2. Headlamp of claim 1, **characterized in that** the swiveling axis (22) is located on a side of the reflector (7, 25, 35, 45, 51) that faces away from the central longitudinal plane of the vehicle.

3. Headlamp of claim 1 or 2, **characterized in that** the adjustment device (17) is held by a carrier frame (6) of the reflector (7, 25, 35, 45, 51) which also carries another reflector (8) for another lighting function.

4. Headlamp of claims 1 to 3, **characterized in that** the adjustment device (17) comprises a servo drive (18) that a tappet of the drive (19) links to the reflector (7) and **in that** the servo drive (18) is attached in an articulated manner.

5. Headlamp of claims 1 to 4, **characterized in that** the reflector (25, 35, 45, 51) is linked to the servo drive (18) by pivot joints (26, 27, 36, 37, 42, 43) supporting at least two directions of movement.

6. Headlamp of claims 1 to 5, **characterized in that** the pivot joints are designed such that the first pivot joint (26, 36, 42) generates a rotary motion around a first radius (32, 39) and the second pivot joint (27, 37, 43) generates a rotary motion around a second radius (33, 41), wherein the first radius (32, 39) and the second radius (33, 41) are identical or not identical.

7. Headlamp of claims 1 to 6, **characterized in that** the first pivot joint (26, 36, 42) is located on one side of the vertical central longitudinal plane of the reflector (25, 35, 45) and the second pivot joint (27, 37, 43) is located on the opposite side of the vertical central longitudinal plane of the reflector (25, 35, 45).

8. Headlamp of claims 1 to 7, **characterized in that** at least one pivot joint (26, 27, 36) consists of a sliding link (30, 38) acting as the sleeve to a guiding element (31) of the reflector (25, 35).

9. Headlamp of claims 1 to 8, **characterized in that** the pivot joint (42, 43) is made up of an articulated rod assembly (44).

10. Headlamp of claims 1 to 9, **characterized in that** the plane made up of the front edge (15) of the reflector (7, 25, 35, 45, 51) is located either on the plane of a part (12) forming the external lateral end of the headlamp or at some distance behind the plane of said terminating part (12).

## Revendications

1. Projecteur pour véhicules avec un élément de projecteur feu de croisement (3) comportant un réflecteur (7) et une source d'éclairage (9) disposée dans la section centrale du réflecteur (7) et avec un dispositif de réglage (17) servant à régler le réflecteur (7) autour d'un axe de pivotement vertical (22), le réflecteur (7) étant essentiellement logé de manière orientable autour d'un axe de pivotement (22) se trouvant dans la section d'un bord avant (15) du réflecteur (7) **caractérisé en ce qu'**un élément d'indication de sens (5) est disposé sur un côté de l'élément du projecteur feu de croisement (3) opposé au niveau central longitudinal du véhicule et que l'axe de pivotement (22) est disposé dans une telle section du bord avant (15) du réflecteur (7) qui se trouve à proximité d'un élément de terminaison avant (12) d'un élément d'indication de sens (5).

2. Projecteur selon la revendication 1, **caractérisé en ce que** l'axe de pivotement (22) passe sur un des côtés du réflecteur (7, 25, 35, 45, 51) opposé au plan central longitudinal du véhicule.

3. Projecteur selon la revendication 1 ou 2, **caractérisé en ce que** le dispositif de réglage (17) repose sur un cadre porteur (6) du réflecteur (7, 25, 35, 45, 51) qui porte en plus un réflecteur (8) pour une autre fonction d'éclairage.

4. Projecteur selon l'une des revendications 1 à 3, **caractérisé en ce que** le dispositif de réglage (17) comprend un moteur de réglage (18) qui est relié de manière articulée au réflecteur (7) par un coulisseau moteur (19) et que le moteur de réglage (18) est à logement articulé.

5. Projecteur selon l'une des revendications 1 à 4, **caractérisé en ce que** le réflecteur (25, 35, 45, 51) est couplé au moteur de réglage (18) par au moins deux raccords de mouvements (26, 27, 36, 37, 42, 43) produisant deux sens de mouvements différents.

6. Projecteur selon l'une des revendications 1 à 5, **caractérisé en ce que** les raccords de mouvements sont réalisés de manière que le premier raccord de mouvement (26, 36, 42) provoque un mouvement de rotation autour d'un premier rayon (32, 39) et le deuxième raccord de mouvement (27, 37, 43) un mouvement de rotation autour d'un deuxième rayon (33, 41), le premier rayon (32, 39) et le deuxième rayon (33, 41) étant identiques ou non.

7. Projecteur selon l'une des revendications 1 à 6, **caractérisé en ce que** le premier raccord de mouvement (26, 36, 42) est disposé sur l'un des côtés du plan central longitudinal vertical du réflecteur (25, 35, 45) et le deuxième raccord de mouvement (27, 37, 43) sur le côté opposé du plan central longitudinal vertical du réflecteur (25, 35, 45).

8. Projecteur selon l'une des revendications 1 à 7, **caractérisé en ce qu'**au moins un raccord de mouvement (26, 27, 36) est formé par un guidage en coulisse (30, 38) dans lequel est guidé un élément de guidage (31) du réflecteur (25, 35).

9. Projecteur selon l'une des revendications 1 à 8, **caractérisé en ce que** le raccord de mouvement (42, 43) est formé par une tige articulée (44).

10. Projecteur selon l'une des revendications 1 à 9, **caractérisé en ce que** le plan formé par le bord avant (15) du réflecteur (7, 25, 35, 45, 51) est disposé dans le plan d'un élément de terminaison (12) du projecteur se trouvant à l'extérieur sur le côté ou à un écartement en retrait par rapport au plan de l'élément de terminaison (12).
